# EUROPÄISCHE PATENTSCHRIFT

(11) **EP 2 333 309 B1**
(45) Veröffentlichungstag und Bekanntmachung des Hinweises auf die Patenterteilung: **09.10.2013**
(21) Anmeldenummer: 10015332.9
(22) Anmeldetag: 06.12.2010
(51) Int. Cl.: F03B 13/14, F03B 13/24, F03B 11/02

(54) **Energieerzeugungsanlage mit einer Luftturbine**
Energy generation assembly with an air turbine
Installation de production d'énergie avec turbine à air

(30) Priorität: 10.12.2009 DE 102009057511
(43) Veröffentlichungstag der Anmeldung: 15.06.2011
(73) Patentinhaber: Voith Patent GmbH, 89522 Heidenheim (DE)
(72) Erfinder: Banzhaf, Hans-Ulrich, 89522 Heidenheim (DE); Starzmann, Ralf, 89555 Söhnstetten (DE)
(74) Vertreter: Weitzel, Wolfgang

(56) Entgegenhaltungen:
- CA-A1- 2 552 091
- DE-A1-102008 004 761
- GB-A- 2 085 975
- GB-A- 2 125 113
- GB-A- 2 250 321
- JP-A- 60 242 209

## Beschreibung

Die Erfindung betrifft eine Energieerzeugungsanlage mit einer Luftturbine, insbesondere ein Wellenkraftwerk mit einer bidirektional anströmbaren gleichsinnig umlaufenden Turbine, wie einer Wells-Turbine. Auf den Oberbegriff von Anspruch 1 wird verwiesen.

Wellenkraftwerke, die nach dem OWC-Prinzip arbeiten, sind bekannt - hierzu wird exemplarisch auf die US 5,191,225 verwiesen. Dabei erzeugen gegen eine Wellenkammer mit einem unter dem Wasserspiegel liegenden Zustrom anbrandende Wellen einen sich mit dem Wellentakt hebenden und senkenden Wasserspiegel in der Kammer. Als Folge entstehen in der darüber befindlichen Luftsäule Druckschwankungen, die einen oszillierenden Luftstrom in einem zur Außenumgebung führenden Strömungskanal erzeugen. In diesem ist zur Energiegewinnung eine bidirektional anströmbare Luftturbine angeordnet.

Eine mögliche Ausführungsform einer beidseitig anströmbaren Luftturbine, die unabhängig von der Anströmungsrichtung ihren Drehsinn beibehält, stellt eine Wells-Turbine dar. Hierzu wird beispielhaft die US 4,313,711 genannt. Wells-Turbinen weisen eine Vielzahl von Turbinenblättern auf, mit typischerweise tropfenförmigen, symmetrischen Profilen, deren Profilsehnen in der Rotationsebene der Turbine liegen. Dabei werden üblicherweise starr angeordnete Turbinenblätter verwendet, allerdings sind auch Ausgestaltungen mit einer beweglichen Anlenkung der Turbinenblätter an einem Nabenbauteil bekannt.

GB 2 250 321 A beschreibt eine Energieerzeugungsanlage mit den Merkmalen des Oberbegriffes von Anspruch 1. Dabei ist dem Mündungsbereich ein Schutzgitter zugeordnet, das dem Diffusorabschnitt in Mündungsrichtung nachfolgt.

JP 60 242209 A beschreibt eine Energieerzeugungsanlage mit einer porösen schallabsorbierenden Platte, die dem Mündungsbereich des Diffusorabschnittes zugeordnet ist.

GB 2 125 113 A beschreibt eine radial durchströmte Turbine mit einem Prallkörper als Schalldämpfer.

Als Alternative zu axial durchströmten Wells-Turbinen ist in der US 4,533,292 A eine gleichsinnig umlaufende Luftturbine für eine oszillierende Anströmung offenbart, die radial durchströmt wird. Alternative Bauformen zu Wells-Turbinen stellen Impulsturbinen dar, die beispielsweise in der WO 06137696 A1 dargestellt sind.

Ein Problem der voranstehend genannten Luftturbinen ist deren hohe Geräuschemission beim Betrieb, die zum einem auf die hohe Umlaufgeschwindigkeit der Turbine zurückzuführen ist, zum anderen entstehen starke Turbinengeräusche durch einen Strömungsabriss an den Turbinenblättern bei hohen Durchflusskoeffizienten. Darüber hinaus ist die oszillierende Strömung im Strömungskanal eines Wellenkraftwerks durch starke Geschwindigkeitsfluktuation gekennzeichnet, die auf Unregelmäßigkeiten der Wellenanregung zurückzuführen sind. Weitere Geräuschquellen stellen die vielfachen Umlenkungen der antreibenden Luftströmung im Bereich der Luftturbine dar, die durch zusätzliche Einbauten sowie Tragstreben, etwa für einen elektrischen Generator, der der Luftturbine zugeordnet ist, oder von Sperrventilen und dergleichen verursacht werden.

Beim Bau von Wellenkraftwerken sind meist Lärmemissionsgrenzwerte einzuhalten. Dies gilt insbesondere beim Betrieb solcher Energieerzeugungsanlagen in der Nähe bewohnter Gebiete. Entsprechend können Vorrichtungen zur Gewinnung von Wellenenergie nur dann in Molen und Wellenbrechern von Hafenanlagen integriert werden, wenn die Betriebsgeräusche reduziert werden können.

Als eine mögliche Maßnahme zur Lärmbekämpfung wurde vorgeschlagen, Strömungskanäle von Wellenkraftwerken in hierfür vorgesehene Maschinenhäuser münden zu lassen. Diese müssen großbauend angelegt sein oder die Anlagenleistung muss begrenzt werden.

Wird alternativ jeder gattungsgemäßen Luftturbine ein separater Schalldämpfer zugeordnet, so ist eine wesentliche Voraussetzung, dass durch den Schalldämpfer kein die Anlagenleistung wesentlich reduzierender Druckverlust eintritt. Entsprechend wurden bisher Schalldämpfer, insbesondere für Wells-Turbinen, verwendet, die einen gleich bleibenden Querschnitt aufweisen und deren Wandungsflächen zur Schallabsorption mit einem Schallschluckmaterial ausgekleidet sind. Meist werden Ausgestaltungen gewählt, für die im Innern des Strömungskanals im Bereich des Schalldämpfers ein Kernrohr in koaxialer Anordnung zum Außenrohr vorgesehen ist. Dieses befindet sich im Strömungsschatten der Nabe der Turbine beziehungsweise des ebenfalls zentral angeordneten elektrischen Generators. Entsprechend ist durch das Kernrohr eine weitere Wandungsfläche gegeben, die ebenfalls mit Schallschluckmaterial bedeckt werden kann.

Die bisher bekannt gewordenen koaxial angeordneten Schalldämpfer für Wells-Turbinen sind bisher nicht hinreichend effizient. Darüber hinaus besteht aufgrund der hohen Durchtrittsgeschwindigkeiten der Luftströmung durch derartige Schalldämpfer und durch Ablösungen an den Turbinenschaufeln verursachte Turbulenzen das Problem, dass das notwendigerweise porös und damit weich ausgebildete Schallschluckmaterial auf Dauer den Belastungen nicht standhält und der Schalldämpfer daher einer regelmäßigen Wartung unterliegt.

Der Erfindung liegt die Aufgabe zugrunde, eine Energieerzeugungsanlage mit einer bidirektional anströmbaren, gleichsinnig umlaufenden Luftturbine in einem Strömungskanal so zu gestalten, dass die Lärmemission der Anlage beim Betrieb reduziert ist. Dabei soll die Luftturbine einen hohen Wirkungsgrad aufweisen, der nicht wesentlich durch die Schallschutzmaßnahmen reduziert ist. Ferner soll die Lösung konstruktiv einfach sein, wobei insbesondere ein die Luftturbine umschließendes Maschinenhaus zur Geräuschkapselung nicht notwendig sein sollte.

Die der Erfindung zugrunde liegende Aufgabe wird durch Merkmale des unabhängigen Anspruchs gelöst. Vorteilhafte Ausgestaltungen ergeben sich aus den Unteransprüchen.

Die Erfinder haben erkannt, dass ein effektiver Schallschutz und eine Luftturbine mit hohem Wirkungsgrad durch eine Ausgestaltung des Mündungsbereichs des Strömungskanals, in dem sich die Luftturbine befindet, bewirkt wird, für die ein Diffusor mit einem schallreflektierenden Prallkörper kombiniert wird.

Ein sich aufweitender Abschnitt im Mündungsbereich zur Außenumgebung hin, der nachfolgend als Diffusorabschnitt bezeichnet wird, dient bekanntermaßen der Rückgewinnung kinetischer Energie, indem die Strömungsgeschwindigkeit im Strömungskanal ab- und der Druck zunimmt. Vorliegend erzeugt die für eine Ausströmung zur Außenumgebung hin stromaufwärts gelegene Luftturbine einen starken Drall im Nachlauf der Strömung. Dies erlaubt die Verwendung großer Öffnungswinkel für die Innenwandung der Außenschale des Diffusorabschnitts. Dabei werden die Öffnungswinkel an den Drall in der Strömung angepasst und zur Verkürzung der Baulänge des Diffusors und zur effizienten Strömungsverlangsamung vor der Prallplatte möglichst groß gewählt, wobei die Obergrenze für den Öffnungswinkel durch Zwischenablösungen an der Innenwandung der Außenschale des Diffusorabschnitts festgelegt wird. Für die schnell und gleichsinnig umlaufenden Luftturbinen der gattungsgemäßen Wellenkraftwerke ist die Ausströmung im Diffusor, für die die maximale Strömungsgeschwindigkeit vorliegt, mit einer hohen Drallkomponente behaftet, die es erlaubt, einen unüblich großen Öffnungswinkel des Außenrohrs eines axialen Diffusors zu wählen, der bevorzugt größer als 8°, besonders bevorzugt größer als 10° ist. Des Weiteren ist als Obergrenze ein Öffnungswinkel kleiner oder gleich 14° von Vorteil.

Des Weiteren führt der große Drall und eine nach radial außen gerichtete Strömungskomponente nach der Luftturbine dazu, dass auch für einen Kurzdiffusor der erfindungsgemäß nachfolgende Prallkörper ohne einen wesentlichen Leistungsverlust so vor der der Austrittsöffnung des Diffusors angeordnet werden kann, dass dessen Projektion wenigstens den gesamten freien Querschnitt des Diffusors überdeckt. Als Folge wird der in Mündungsrichtung transportierte Schall zu wesentlichen Teilen in den Strömungskanal zurück reflektiert. Zusätzlich wird die Dämpfung durch eine Bedeckung der Innenwandung des Diffusorabschnitts und/oder des Prallkörpers mit einem schallabsorbierenden Material verbessert.

Die verlangsamte und nach radial außen geführte Luftströmung kann zur Außenumgebung hin zwischen der Wandung des Diffusorabschnitts und dem Prallkörper ohne wesentliche Druckverluste entweichen, wobei bevorzugt die hierfür zur Verfügung stehende Strömungsdurchgangsfläche im Wesentlichen dem maximalen freien Querschnitt am Ausgang des Diffusorabschnitts entspricht. Die Ausströmung erfolgt demnach im Wesentlichen ungehindert. Um eine Einströmung in die Gegenrichtung zum Strömungskanal zu verbessern, kann sich ein düsenförmiges Einlasselement an die Strömungsdurchgangsfläche anschließen, das Turbulenzen im Zustrom verringert.

Im einfachsten Fall besteht der Prallkörper für eine axial durchströmte Luftturbine und einem kreisförmigen Querschnitt des Strömungskanals aus einer scheibenförmigen Prallplatte, die axial beabstandet zum Diffusorabschnitt zentral zur Längsachse des Strömungskanals angeordnet ist. Für Luftturbinen mit radialer Durchströmung kann der Prallkörper als im Wesentlichen ringförmiges Element angelegt sein, das einen ebenfalls ringförmig angelegten Mündungsbereich des Strömungskanals für eine radial durchströmte Turbine umgibt.

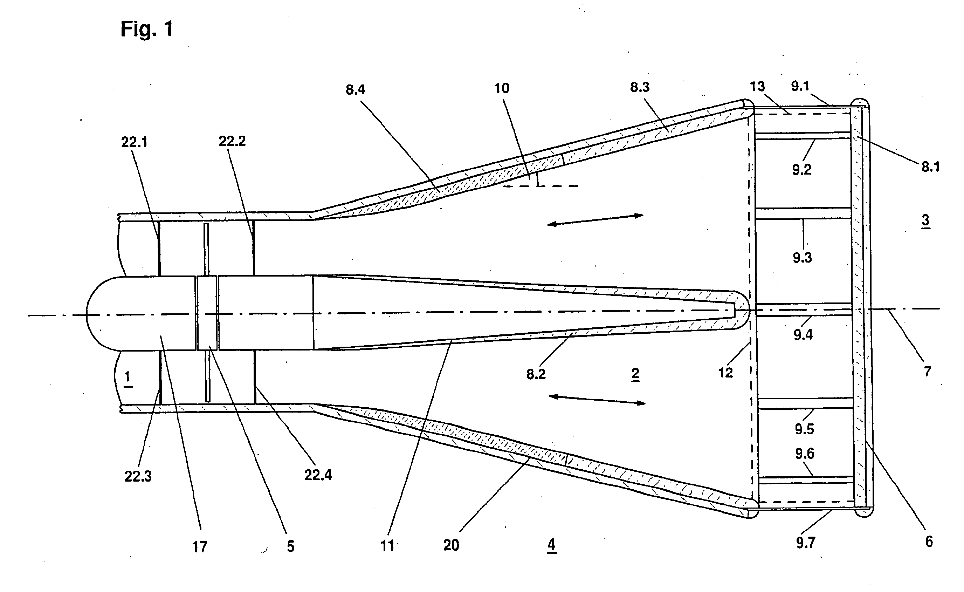

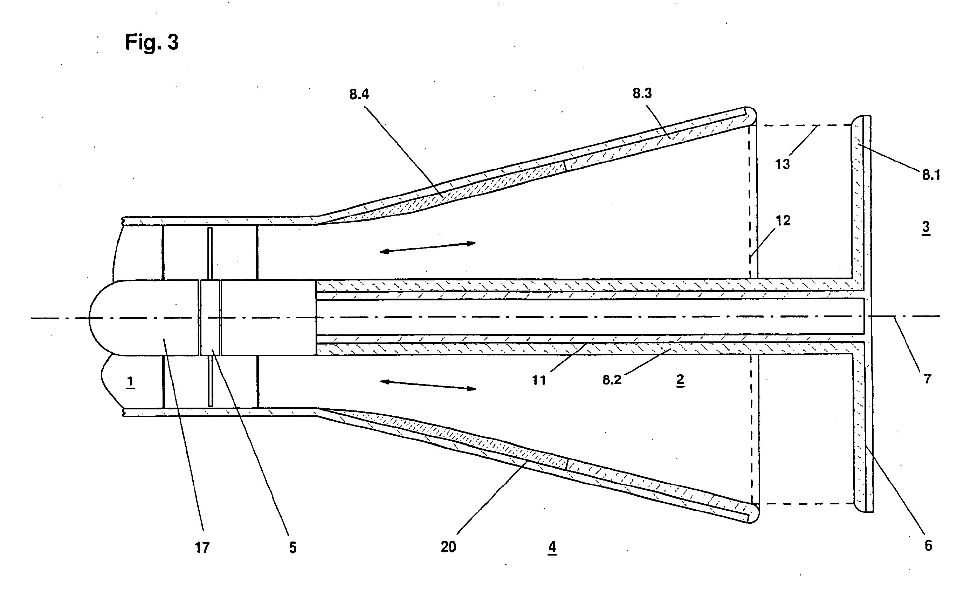

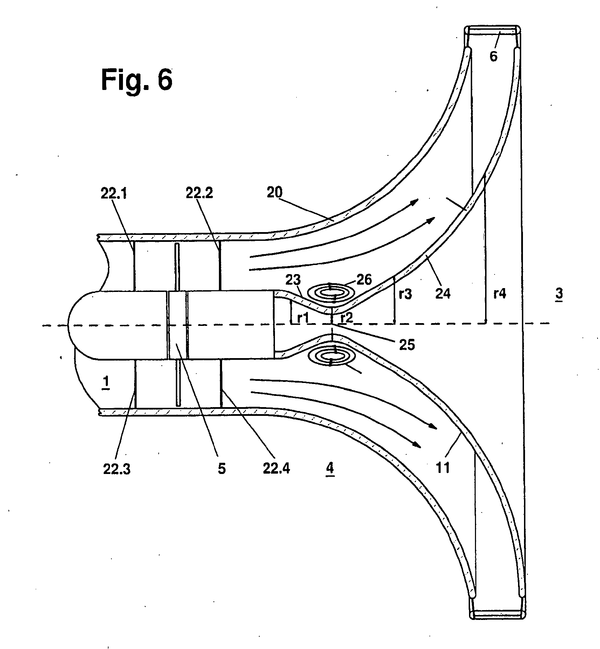

Vorteilhafte Ausgestaltungen der Erfindung werden nachfolgend anhand von bevorzugten Ausgestaltungsbeispielen und in Verbindung mit Figurendarstellungen genauer erläutert. Dabei zeigt Figur 1 eine Ausführungsform gemäß dem Stande der Technik, und die übrigen Figuren zeigen erfindungsgemäße Ausführungsformen, wobei bei den Figuren 3 bis 7 ein Kulissenelement nicht dargestellt ist.
- Figur 1: zeigt den Mündungsbereich eines Strömungskanals für eine bekannte Energieerzeugungsanlage im Längsschnitt.
- Figur 2: zeigt eine weitere erfindungsgemäße Ausgestaltung im Längsschnitt mit einem mehrteiligen Prallkörper.
- Figur 3: zeigt eine weitere erfindungsgemäße Ausgestaltungsvariante mit einem Prallkörper, der einstückig mit einem Zentralelement im Diffusorabschnitt verbunden ist, im Längsschnitt.
- Figur 4: zeigt eine weitere erfindungsgemäße Ausgestaltungsvariante im Längsschnitt mit einem sich aufweitenden Zentralelement und einem zusätzlichen, düsenförmigen Einlasselement.
- Figur 5: zeigt eine weitere erfindungsgemäße Ausgestaltungsalternative im Längsschnitt mit einer Kombination eines axialen und radialen Diffusors (Axial-Radial-Diffusor) und einem radial anschließenden Prallkörper.
- Figur 6: zeigt eine weitere erfindungsgemäße Ausgestaltungsalternative im Längsschnitt mit einem Axial-Radial-Diffusor, dessen Zentralelement eine radiale Einschnürung aufweist.
- Figur 7: zeigt eine erfindungsgemäße Gestaltung für eine radial durchströmte Luftturbine im Längsschnitt.

In Figur 1 wird schematisch vereinfacht ein Strömungskanal 1 mit einem Mündungsbereich 2 skizziert, der sich zur Außenumgebung 3 hin öffnet. Für die Außenumgebung 3 wird vereinfacht angenommen, dass dort ein so hinreichend großes Freivolumen vorliegt, dass die Ein- und Ausströmung aus dem Strömungskanal 1 zu keinen wesentlichen Druckschwankungen führt.

Des Weiteren ist im Strömungskanal 1 eine bidirektional anströmbare, gleichsinnig umlaufende Luftturbine 5 angeordnet, die vorliegend als Wells-Turbine gestaltet ist und eine Turbinenstufe aufweist. Weitere Turbinenstufen oder ein Leitapparat sind denkbar, jedoch nicht dargestellt. Die Turbinenstufe treibt einen zentral im Strömungskanal 1 angeordneten elektrischen Generator 17 an. Vorliegend wird die Luftturbine 5 axial angeströmt und weist eine parallel zur Längsachse 7 des Strömungskanals 1 verlaufende Drehachse auf.

Erfindungsgemäß ist im Mündungsbereich 2 des Strömungskanals 1 ein Diffusorabschnitt 4 vorgesehen. Dieser weist für den äußeren Diffusorteil 20 bevorzugt einen Öffnungswinkel von größer als 8° auf. Dabei gibt die Längsachse 7 und die Lage des Mündungsbereichs 2 die Mündungsrichtung vor, die für die vorliegende Gestaltung axial orientiert ist. In Figur 1 ist der äußere Wandungswinkel 10 relativ zur Längsachse 7, der den halben Öffnungswinkel der Innenwandung des äußeren Diffusorteils 20 festlegt, skizziert. Zusätzlich ist symmetrisch zur Längsachse 7 im Inneren des Diffusorabschnitts 4 ein Kernrohr, nachfolgend als Zentralelement 11 bezeichnet, vorgesehen, das sich für das gezeigte Ausführungsbeispiel in Mündungsrichtung verjüngt und so den strömungsverlangsamenden Effekt des Diffusorabschnitts 4 erhöht.

In Mündungsrichtung und damit vorliegend axial zum Diffusorabschnitt 4 beabstandet ist ein Prallkörper 6 angeordnet, der symmetrisch zur Längsachse 7 gestaltet ist und dessen radiale Erstreckung so gewählt ist, dass eine Projektion seiner Außenkontur den maximalen freien Querschnitt 12 des Diffusorabschnitts 4 wenigstens vollständig überdeckt. Der Prallkörper 6 ist, bezogen auf die Ausströmung, nachfolgend zum Diffusorabschnitt 4 angeordnet und befindet sich damit in einem Bereich einer in Axial- und in Umfangsrichtung wesentlich verlangsamten Ausströmungsgeschwindigkeit.

Des Weiteren ist aufgrund der mit einem hohen Drall in den Diffusorabschnitt 4 von der Luftturbine 5 aus eintretenden Strömung ein großer äußerer Wandungswinkel 10 für die Innenwandung des äußeren Diffusorteils 20 möglich, sodass auch bei einer begrenzten axialen Baulänge des Diffusorabschnitts 4 der nachfolgende Prallkörper 6 kein den Wirkungsgrad wesentlich reduzierendes Strömungshindernis darstellt. Besonders bevorzugt wird der Prallkörper 6 von der Wandung im Mündungsbereich 2 des Diffusorabschnitts 4 derart beabstandet, dass die resultierende Strömungsdurchgangsfläche 13, die vorliegend im Wesentlichen ringförmig angelegt ist, wenigstens dem maximalen freien Querschnitt 12 entspricht, der dem Diffusorabschnitt 4 zugeordnet ist.

Die wesentliche schallreduzierende Wirkung des Prallkörpers 6 besteht darin, den Querschnitt des Strömungskanals 1 in Mündungsrichtung abzudecken und Schall in den Strömungskanal 1 zurück zu reflektieren oder zu absorbieren. Des Weiteren ist die nach innen weisende Wandung des Diffusorabschnitts 4, des Zentralelements 11 sowie der dem Strömungskanal 1 zugewandten Wandung des Prallkörpers 6 wenigstens in Teilbereichen mit einem schallabsorbierenden Material 8.1, 8.2, 8.3 bedeckt. Vorliegend wird hierfür ein hochporöses Material mit guten Schallschluckeigenschaften in jenen Bereichen eingesetzt, für die bereits eine hinreichende Strömungsverlangsamung eingetreten ist. Durch diese Maßnahme erhöht sich die Standfestigkeit des schallabsorbierenden Materials 8.1, 8.2, 8.3. Entsprechend kann in den Bereichen mit hohen Strömungsgeschwindigkeiten und Turbulenzen, insbesondere im luftturbinenseitigen Einlassbereich des Diffusorabschnitts 4, ein anderes schallabsorbierendes Material 8.4 verwendet werden, das für höhere Belastungen ausgelegt ist. Solche hochbelasteten Bereiche liegen auch an den Wandungsteilen des Diffusorabschnitts 4 vor, an denen Zwischenablösungen nicht gänzlich ausgeschlossen werden können. Ferner kann anstatt oder zusätzlich zur Belastungsanpassung des schallabsorbierenden Materials 8.4 wenigstens abschnittsweise gänzlich auf das Schallschluckmaterial verzichtet werden.

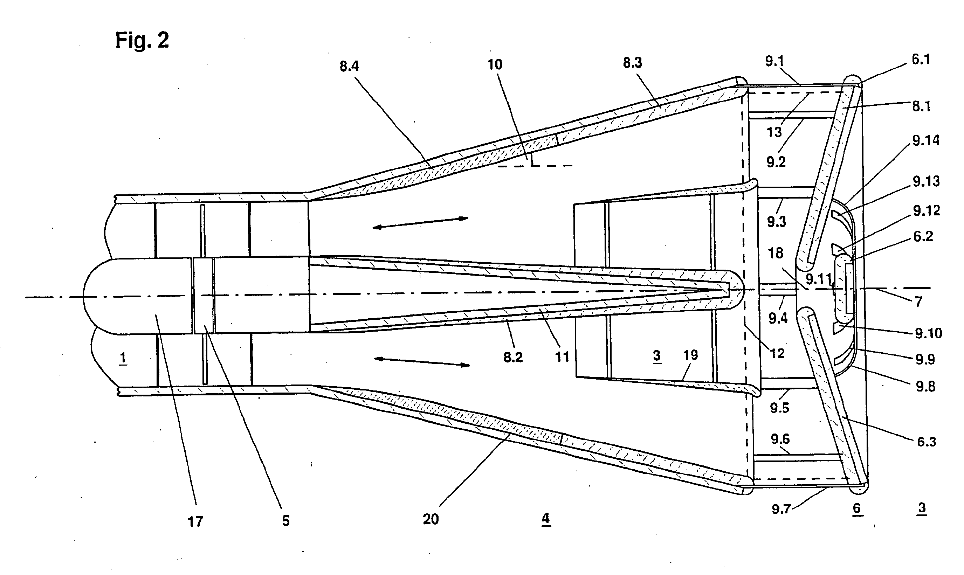

Für die in Figur 1 gezeigte Ausgestaltungsvariante ist der einteilige Prallkörper 6 über Tragstege 9.1, 9.2, 9.3, 9.4, 9.5, 9.6, 9.7 mit dem Diffusorabschnitt 4 verbunden. In Figur 2 ist eine weitere Ausführungsform der Erfindung mit einem mehrteiligen Prallkörper 6 gezeigt. Dabei wird wiederum die Projektion der Gesamtheit der Außenkonturen der Prallkörperkomponenten 6.1, 6.2, 6.3 auf den Ausgang des Diffusorabschnitts 4 so angelegt, dass der maximale freie Querschnitt 12 des Diffusorabschnitts 4 gänzlich abgedeckt ist, um eine möglichst effiziente Schallrückreflektion in den Strömungskanal 1 zu bewirken. Die untereinander über die Tragstege 9.8 - 9.14 verbundenen Prallkörperkomponenten 6.1, 6.2, 6.3 erzeugen zusätzlich zur radial äußeren Strömungsdurchgangsfläche 13 eine zentrale Öffnung 18. Für eine Ausströmung wird aufgrund des hohen Dralls nach der Luftturbine 5 das wesentliche Luftvolumen über die Strömungsdurchgangsfläche 13 zur Außenumgebung 3 geführt. Für eine Einströmung in den Strömungskanal 1 kann jedoch durch die zentrale Öffnung 18 der Zustrom verbessert werden. Diese zentrale Öffnung 18 wird durch die Prallkörperkomponente 6.2 zur Schallreduktion abgedeckt. Eine weitere im Einzelnen nicht dargestellte Ausgestaltung sieht einen teildurchlässigen Prallkörper vor.

Ferner ist in Figur 2 ein Kulissenelement 19 skizziert, das zwischen dem äußeren Diffusorteil 20 und dem Zentralelement 11 angeordnet ist. Dies dient dem Zweck einer weiteren Schallreduktion, insbesondere für großbauende Diffusoren, für die der Abstand zwischen dem äußeren Diffusorteil 20 und dem Zentralelement 11 für die zu dämpfenden Frequenzen andernfalls zu groß werden würde. Des Weiteren dient das Kulissenelement 19 der Strömungsführung und kann entsprechend angeordnet und gestaltet sein, auch mehrere Kulissenelemente 19 sind denkbar.

Eine weitere Ausgestaltungsalternative ist in Figur 3 schematisch vereinfacht gezeigt. Dabei wurde das Zentralelement 11 zum Tragen des Prallkörpers 6 axial verlängert und weist einen gleichbleibenden Querschnitt auf. Besonders bevorzugt wird eine einstückige Ausbildung des Zentralelements 11 und des Prallkörpers 6.

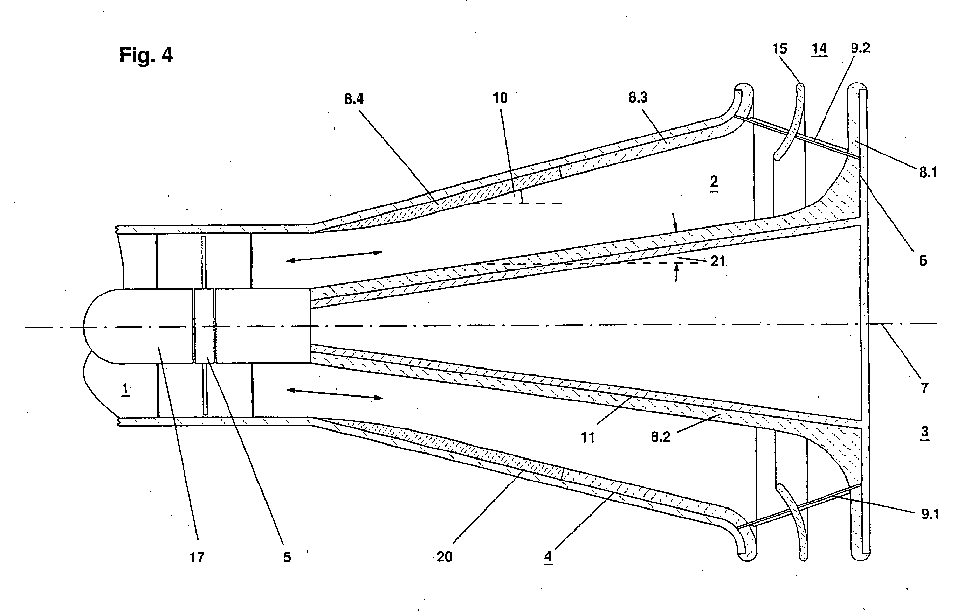

Figur 4 zeigt eine Weitergestaltung der in Figur 3 skizzierten Ausführungsform.
Dabei wird zur Anpassung an den hohen Drall und die radialen Richtungskomponenten abstromseitig zur Luftturbine ein sich in Mündungsrichtung aufweitendes Zentralelement 11 vorgesehen. Für die dargestellte Ausführung kann dem Zentralelement 11 ein positiver innerer Wandungswinkel 21 zugeordnet werden. Dabei sind Ausgestaltungen besonders bevorzugt, für die der innere Wandungswinkel 21 des Zentralelements 11 größer ist als der äußere Wandungswinkel 10 des äußeren Diffusorteils 20. Durch die Form des Zentralelements 11 wird der Totwasserbereich ausgefüllt und es ist möglich, einen sich stark aufweitenden und kurzbauenden axialen Diffusor oder einen Axial-Radial-Diffusor zu realisieren.

Des Weiteren ist in Figur 4 eine Ausgestaltung skizziert, für die ein düsenförmiges Einlasselement 14 an den Diffusorabschnitt 4 in Mündungsrichtung anschließt. Dabei werden insbesondere Strömungsverluste der von der Außenumgebung 3 beim Ansaugen zufließenden Strömung reduziert. Das düsenförmige Einlasselement 14 weist bevorzugt wenigstens eine Zwischenwand 15 auf, sodass Turbulenzen beim Einströmen durch die Düsenform verringert werden. Für die skizzierte Ausgestaltungsvariante geht der Prallkörper 6 in das düsenförmige Einlasselement 14 über und bildet einen seiner Wandabschnitte.

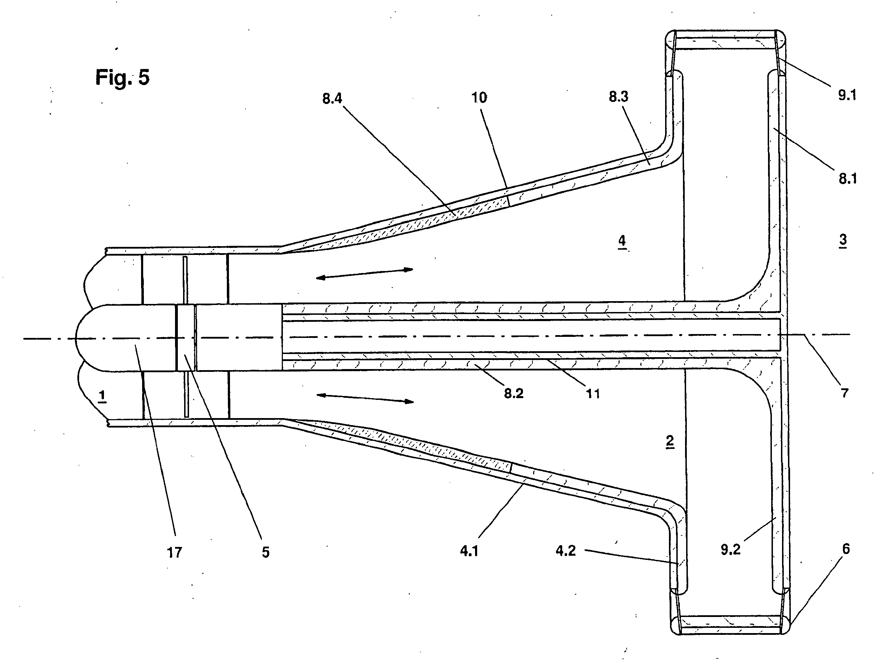

Das in Figur 4 skizzierte düsenförmige Einlasselement 14 wirkt in Ausströmungsrichtung als radialer Diffusor. Für eine Weitergestaltung, die in Figur 5 skizziert ist, umfasst der Diffusorabschnitt 4 des Mündungsbereichs 2 eine Kombination aus einem Axialdiffusor 4.1 und einem für die Ausströmung abstromseitig anschließenden Radialdiffusor 4.2. Demnach ist die Mündungsrichtung die durch den Radialdiffusor 4.2 vorgegebene Radiale und der in Mündungsrichtung dem Diffusorabschnitt 4 nachfolgende Prallkörper 6 ist als ein im Wesentlichen ringförmiges Element angelegt, das den aus dem Radialdiffusor 4.2 austretenden Luftschall abdämpft und rückreflektiert.

Figur 5 zeigt eine weitere Ausgestaltung mit einem Diffusorabschnitt 4 in Form eines Axial-Radialdiffusors, dem ein ringförmiger Prallkörper 6 zugeordnet ist. Dabei weist das Ausführungsbeispiel ein Zentralelement 11 auf, dessen maximale radiale Erstreckung senkrecht zur Axialrichtung in einem ersten Axialabschnitt 23 bis zu einer radiale Einschnürung 25 kontinuierlich abnimmt und in einem zweiten Axialabschnitt 24 von der radialen Einschnürung 25 ausgehend kontinuierlich zunimmt, wobei der zweite Axialabschnitt 24 dem ersten Axialabschnitt 23 in Ausblasrichtung nachfolgt und bis zur Außenumgebung 3 reicht. Zur Verdeutlichung der Kontur des Zentralelements 11 sind exemplarisch gewählte, die Querschnittsabmessungen repräsentierende Radien r1, r2, r3, r4 eingezeichnet, wobei r2 kleiner als r1, r3 und r4 ist. Die radiale Einschnürung 25 dient dazu, einen stationären Strömungswirbel zu stabilisieren, der den effektiven Querschnitt des Zentralelements 11 adaptiv anpasst.

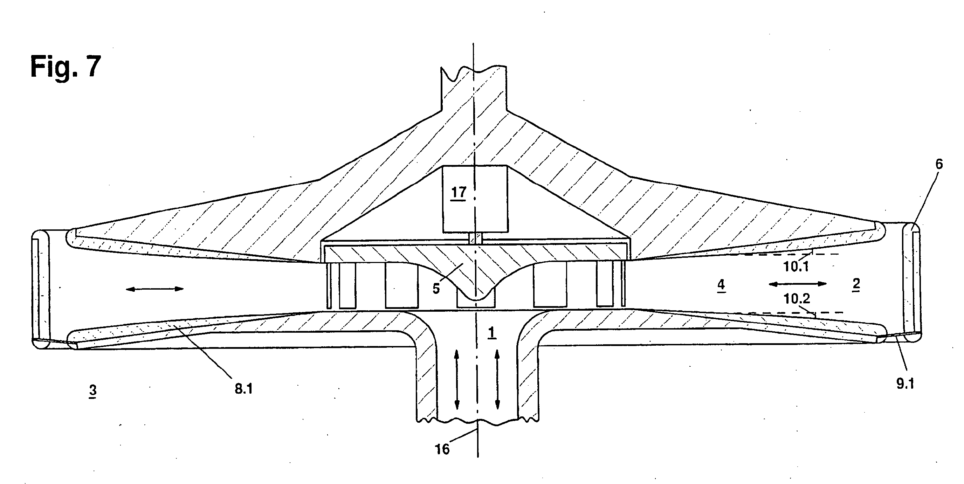

Figur 7 zeigt eine alternative Ausgestaltung der Erfindung im Längsschnitt für eine radial durchströmte Luftturbine 5. Entsprechend zur Ausströmungsrichtung und dem ringförmig angelegten Mündungsbereich 2 des Strömungskanals 1 ist vorliegend die Mündungsrichtung radial im Verhältnis zur Drehachse 16 der Luftturbine 5. Aufgrund der radialen Ausströmungsrichtung nimmt in Mündungsrichtung der freie Querschnitt kontinuierlich zu. Bevorzugt wird der Diffusoreffekt durch eine Winkelstellung der Wandungen im Mündungsbereich 2 relativ zur Radiale im Diffusorabschnitt 4 zusätzlich verbessert. Hierzu sind in Figur 7 die ober- und unterseitigen Wandungswinkel 10.1, 10.2 skizziert. Ferner sind im Einzelnen nicht dargestellte Ausgestaltungen denkbar, für die die Ober- und Unterseiten parallel verlaufen oder nach innen zur Radialen hin verkippt sind, d.h. es liegen negative Wandungswinkel vor. Für die letztgenannte Gestaltung soll sich weiterhin aufgrund der Aufweitung in Radialrichtung des scheibenförmig angelegten Mündungsbereichs 2 eine Diffusorwirkung ergeben, die jedoch zur Vermeidung von Zwischenablösungen der Ausströmung durch die nach innen geneigten Ober- und Unterseite reduziert wird.

Des Weiteren deckt in der vorliegenden Ausgestaltungsvariante der Prallkörper 6 den maximalen freien Querschnitt 12 in der Projektion ab. Entsprechend ist der Prallkörper 6 im Wesentlichen ringförmig ausgebildet. Dabei ist wiederum eine Ausgestaltung denkbar, für die der Prallkörper 6 segmentiert angelegt ist. So kommt eine Unterteilung in Umfangsrichtung, eventuell mit überlappenden Segmenten, in Frage. Weitere Ausgestaltungsvarianten der Erfindung ergeben sich aus den nachfolgenden Schutzansprüchen.

### Bezugszeichenliste

- 1: Strömungskanal
- 2: Mündungsbereich
- 3: Außenumgebung
- 4: Diffusorabschnitt
- 4.1: Axialdiffusor
- 4.2: Radialdiffusor
- 5: Luftturbine
- 6: Prallkörper
- 6.1, 6.2, 6.3: Prallkörperteilkomponente
- 7: Längsachse
- 8.1 - 8.4: schallabsorbierendes Material
- 9.1, 9.2, 9.3:
- 9.4, 9.5, 9.6:
- 9.7, 9.8, 9.10,:
- 9.11,9.12,:
- 9.13,9.14: Tragsteg
- 10, 10.1, 10.2: äußerer Wandungswinkel
- 11: Zentralelement
- 12: maximaler freier Querschnitt
- 13: Strömungsdurchgangsfläche
- 14: düsenförmiges Einlasselement
- 15: Zwischenwand
- 16: Drehachse
- 17: elektrischer Generator
- 18: zentrale Öffnung
- 19: Kulissenelement
- 20: äußeres Diffusorteil
- 21: innerer Wandungswinkel
- 22.1, 22.2:
- 22.3,22.4: Strebe
- 23: erster Axialabschnitt
- 24: zweiter Axialabschnitt
- 25: radiale Einschnürung
- 26: Strömungswirbel
- r1, r2, r3, r4: Radien

## Patentansprüche

1. Energieerzeugungsanlage umfassend:
1.1 einen Strömungskanal (1) mit einem Mündungsbereich (2) zur Außenumgebung (3) mit einer zugeordneten Mündungsrichtung, wobei der Mündungsbereich (2) als Diffusorabschnitt (4) gestaltet ist;
1.2 eine bidirektional anströmbare Luftturbine (5) mit gleichsinniger Umlaufrichtung, die im Strömungskanal (1) angeordnet ist;
**dadurch gekennzeichnet, dass**
1.3 dem Mündungsbereich (2) ein Prallkörper (6) als Schalldämpfer zugeordnet ist, der dem Diffusorabschnitt (4) in Mündungsrichtung nachfolgt;
**dadurch gekennzeichnet, dass**
1.4 die Energieerzeugungsanlage wenigstens ein Kulissenelement (19) im Diffusorabschnitt (4) umfasst.

2. Energieerzeugungsanlage nach Anspruch 1, **dadurch gekennzeichnet, dass** die Projektion des Prallkörpers (6) auf den Mündungsbereich (2) in Mündungsrichtung den maximalen freien Querschnitt (12) des Diffusorabschnitts (4) wenigstens vollständig überdeckt.

3. Energieerzeugungsanlage nach einem der Ansprüche 1 oder 2, **dadurch gekennzeichnet, dass** die Luftturbine (5) als Wells-Turbine gestaltet ist.

4. Energieerzeugungsanlage nach einem der vorausgehenden Ansprüche, **dadurch gekennzeichnet, dass** die Mündungsrichtung die Axialrichtung des Strömungskanals (1) ist.

5. Energieerzeugungsanlage nach Anspruch 4, **dadurch gekennzeichnet, dass** der Prallkörper (6) als eine symmetrisch zur Axialrichtung liegende Prallplatte ausgebildet ist.

6. Energieerzeugungsanlage nach einem der vorausgehenden Ansprüche, **dadurch gekennzeichnet, dass** der Diffusorabschnitt (4) einen Axialdiffusor (4.1) und einen Radialdiffusor (4.2) umfasst.

7. Energieerzeugungsanlage nach einem der Ansprüche 1 bis 3, **dadurch gekennzeichnet, dass** die Luftturbine eine radial durchströmte Turbine ist und die Mündungsrichtung durch die Radialrichtung der Turbine vorgegeben ist.

8. Energieerzeugungsanlage nach Anspruch 7, **dadurch gekennzeichnet, dass** der Prallkörper (6) relativ zur Drehachse (16) der radial durchströmten Turbine ringförmig ausgebildet ist.

9. Energieerzeugungsanlage nach einem der vorausgehenden Ansprüche, **dadurch gekennzeichnet, dass** der Prallkörper (6) am Diffusorabschnitt (4) befestigt ist.

10. Energieerzeugungsanlage nach einem der vorausgehenden Ansprüche, **dadurch gekennzeichnet, dass** im Diffusorabschnitt (4) ein Zentralelement (11) vorgesehen ist, wobei der Prallkörper (6) am Zentralelement (11) befestigt oder mit diesem einstückig verbunden ist.

11. Energieerzeugungsanlage nach Anspruch 10, **dadurch gekennzeichnet, dass** das Zentralelement (11) wenigstens in Teilabschnitten einen positiven inneren Wandungswinkel (21) aufweist.

12. Energieerzeugungsanlage nach einem der vorausgehenden Ansprüche, **dadurch gekennzeichnet, dass** die dem Inneren des Strömungskanals (1) zugewandten Wände des Diffusorabschnitts (4) und/oder des Zentralelements (11) und/oder des Prallkörpers (6) und/oder die Luftturbine (5) tragende Streben (22.1, 22.2, 22.3, 22.4) ein schallabsorbierendes Material (8.1, 8.2, 8.3, 8.4) umfassen.

13. Energieerzeugungsanlage nach Anspruch 12, **dadurch gekennzeichnet, dass** wenigstens zwei unterschiedliche schallabsorbierende Materialien (8.1, 8.2, 8.3, 8.4) verwendet werden, wobei das schallabsorbierende Material (8.1 - 8.4) an die lokal maximal vorliegenden, durch die Luftströmung bedingten Krafteinwirkungen angepasst ist.

14. Energieerzeugungsanlage nach einem der vorausgehenden Ansprüche, **dadurch gekennzeichnet, dass** die Strömungsdurchgangsfläche (13) zwischen dem Diffusorabschnitt (4) und dem Prallkörper (6) wenigstens der Fläche des maximalen freien Querschnitts (12) im Diffusorabschnitt (4) entspricht.

15. Energieerzeugungsanlage nach Anspruch 10, **dadurch gekennzeichnet, dass** das Zentralelement (11) eine radiale Einschnürung (25) umfasst.

## Claims

1. Energy generation plant comprising:
1.1 a flow channel (1) provided with a mouth region (2) to the surrounding atmosphere (3) having an associated mouth direction, whereas the mouth region (2) is designed as a diffuser section (4);
1.2 an air turbine (5) with air flowing from both sides, with identical direction of rotation, which is arranged in the flow channel (1); **characterised in that**
1.3 a deflector (6) is arranged in the mouth region (2) as a silencer, which follows the diffuser section (4) in the mouth direction; **characterised in that**
1.4 the energy generation plant includes at least one baffle (19) in the diffuser section (4).

2. Energy generation plant according to claim 1, **characterised in that** the projection of the deflector (6) on the mouth region (2) covers at least completely the maximal free cross-section (12) of the diffuser section (4) in the mouth direction.

3. Energy generation plant according to one of the claims 1 or 2, **characterised in that** the air turbine (5) is designed as a Wells turbine.

4. Energy production plant according to one of the previous claims, **characterised in that** the mouth direction is the axial direction of the flow channel (1).

5. Energy generation plant according to claim 4, **characterised in that** the deflector (6) is designed as a baffle plate arranged symmetrically to the axial direction.

6. Energy generation plant according to one of the previous claims, **characterised in that** the diffuser section (4) contains an axial diffuser (4.1) and a radial diffuser (4.2).

7. Energy generation plant according to one of the claims 1 to 3, **characterised in that** the air turbine is a radially flown through turbine and the mouth direction is defined by the radial direction of the turbine.

8. Energy generation plant according to claim 7, **characterised in that** the deflector (6) is annular-shaped with respect to the rotational axis (16) of the radially flown through turbine.

9. Energy generation plant according to one of the previous claims, **characterised in that** the deflector (6) is fixed to the diffuser section (4).

10. Energy generation plant according to one of the previous claims, **characterised in that** a central element (11) is provided in the diffuser section (4), whereas the deflector (6) is fixed to the central element (11) or can be connected thereto as a single piece.

11. Energy generation plant according to claim 10, **characterised in that** the central element (11) exhibits a positive internal wall angle (21) at least in fractions.

12. Energy generation plant according to one of the previous claims, **characterised in that** the walls of the diffuser section (4) and/or of the central element (11) and/or of the deflector (6) and/or struts (22.1, 22.2, 22.3, 22.4) carrying the air turbine (5) include a sound-absorbing material (8.1, 8.2, 8.3, 8.4).

13. Energy generation plant according to claim 12, **characterised in that** at least two different sound-absorbing materials (8.1, 8.2, 8.3, 8.4) are used, whereas the sound-absorbing material (8.1 - 8.4) is adapted to the maximal efforts conditioned by the air flow and available locally.

14. Energy generation plant according to one of the previous claims, **characterised in that** the flow passage surface (13) between the diffuser section (4) and the deflector (6) corresponds at least to the surface of the maximal free cross-section (12) in the diffuser section (4).

15. Energy generation plant according to claim 10, **characterised in that** the central element (11) includes a radial narrowing (25).

## Revendications

1. Centrale de production d'énergie comprenant:
1.1 un canal d'écoulement (1) pourvu d'une zone d'embouchure (2) dirigée vers l'extérieur (3) avec une direction d'embouchure associée, où la zone d'embouchure (2) est conformée comme partie diffusion (4);
1.2 une turbine à air (5) exposée à un écoulement bidirectionnel, avec un sens de circulation identique, qui est disposée dans le canal d'écoulement (1);
caractérisée en ce
1.3 qu'une chicane (6) est associée à la zone d'embouchure (2) en guise de silencieux, disposée en aval de la partie diffusion (4) dans la direction d'embouchure;
**caractérisée en ce que**
1.4 la centrale de production d'énergie comprend au moins un élément coulissant (19) dans la partie diffusion (4).

2. Centrale génératrice d'énergie selon la revendication 1, **caractérisée en ce que** la projection de la chicane (6) sur la zone d'embouchure (2) recouvre au moins complètement la section libre maximale (12) de la partie diffusion (4) dans la direction d'embouchure.

3. Centrale génératrice d'énergie selon l'une des revendications 1 ou 2, **caractérisée en ce que** la turbine à air (5) est conçue comme turbine Wells.

4. Centrale génératrice d'énergie selon l'une quelconque des revendications précédentes, **caractérisée en ce que** la direction d'embouchure est la direction axiale du canal d'écoulement (1).

5. Centrale génératrice d'énergie selon la revendication 4, **caractérisée en ce que** la chicane (6) se présente sous forme de plaque d'impact disposée de manière symétrique par rapport à la direction axiale.

6. Centrale génératrice d'énergie selon l'une quelconque des revendications précédentes, **caractérisée en ce que** la partie diffusion (4) comporte un diffuseur axial (4.1) et un diffuseur radial (4.2).

7. Centrale génératrice d'énergie selon l'une des revendications 1 à 3, **caractérisée en ce que** la turbine à air est une turbine parcourue radialement et la direction d'embouchure est définie par la direction radiale de la turbine.

8. Centrale génératrice d'énergie selon la revendication 7, **caractérisée en ce que** la chicane (6) est de forme annulaire par rapport a l'axe de rotation (16) de la turbine parcourue radialement.

9. Centrale génératrice d'énergie selon l'une quelconque des revendications précédentes, **caractérisée en ce que** la chicane (6) est fixée sur la partie diffusion (4).

10. Centrale génératrice d'énergie selon l'une quelconque des revendications précédentes, **caractérisée en ce qu'**un élément central (11) est prévu dans la partie diffusion (4), où la chicane (6) est fixée sur l'élément central ou bien est solidaire de celui-ci.

11. Centrale génératrice d'énergie selon la revendication 10, **caractérisée en ce que** l'élément central (11) présente un angle de paroi interne positif (21) au moins en plusieurs parties.

12. Centrale génératrice d'énergie selon l'une quelconque des revendications précédentes, **caractérisée en ce que** les parois de la partie diffusion (4) et/ou de l'élément central (11) et/ou de la chicane (6), parois tournées vers l'interieur du canal d'écoulement (1), et/ou les montants (22.1, 22.2, 22.3, 22.4) portant la turbine à air (5), comprennent un matériau insonorisant (8.1, 8.2, 8.3, 8.4).

13. Centrale génératrice d'énergie selon la revendication 12, **caractérisée en ce que** l'on utilise au moins deux matériaux insonorisants différents (8.1, 8.2, 8.3, 8.4), où le matériau insonorisant (8.1 - 8.4) est adapté aux forces exercées, lesquelles sont maximales localement et conditionnées par l'écoulement d'air.

14. Centrale génératrice d'énergie selon l'une quelconque des revendications précédentes, **caractérisée en ce que** la surface de passage d'écoulement (13) entre la partie diffusion (4) et la chicane (6) correspond au moins à la surface de la section libre maximale (12) dans la partie diffusion (4).

15. Centrale génératrice d'énergie selon la revendication 10, **caractérisée en ce que** l'élément central (11) comprend un rétrécissement radial (25).
